# EUROPÄISCHE PATENTSCHRIFT

(11) **EP 2 167 439 B1**
(45) Veröffentlichungstag und Bekanntmachung des Hinweises auf die Patenterteilung: **16.11.2011**
(21) Anmeldenummer: 09705073.6
(22) Anmeldetag: 28.01.2009
(51) Int. Cl.: C03C 11/00, C09K 21/02, E04B 1/94, E04F 15/024, H02G 3/04

(54) **BRANDSCHUTZMITTEL UND VERFAHREN ZU DESSEN EINSATZ**
FIRE PROTECTION AGENT AND METHOD FOR THE USE THEREOF
AGENT PARE-FEU ET SON PROCÉDÉ D'UTILISATION

(30) Priorität: 30.01.2008 DE 102008006778
(43) Veröffentlichungstag der Anmeldung: 31.03.2010
(73) Patentinhaber: Schmidt, Andreas, 15859 Storkow (DE)
(72) Erfinder: KNOPF, Bärbel, 15754 Heidesee (DE)
(74) Vertreter: Moser & Götze
(86) Internationale Anmeldenummer: PCT/EP2009/050966
(87) Internationale Veröffentlichungsnummer: WO 2009/095421

(56) Entgegenhaltungen:
- WO-A-2004/026788
- WO-A-2007/125070
- DE-A1- 4 343 196
- US-A- 3 475 332

## Beschreibung

Die Erfindung betrifft eine Verwendung eines Brandschutzmittels zum vorbeugenden Brandschutz durch dauerhaftes Aufbringen auf das Gefahrenobjekt und/oder dauerhaftes Verfüllen des Gefahrenobjekts bestehend aus einem bis wenigstens 1000°C temperaturfesten hohlen Rundgranulat.

Löschmittel, also Mittel, die zum Löschen von Bränden geeignet sind, sind bekannt. Sie haben die Aufgabe brennende Stoffe unter Berücksichtigung der jeweiligen Brandklasse und vorherrschenden Bedingungen zu löschen. Sie kommen zum Einsatz, wenn der Brand bereits ausgebrochen ist.

Man unterscheidet die Löschmittel nach ihrer Wirkungsweise. So wirken Löschmittel im Wesentlichen durch Ersticken, Abkühlen oder Inhibition.

Das wohl bekannteste Löschmittel Wasser wird bevorzugt zur Bekämpfung von Bränden der Brandklasse A (glutbildende Stoffe) eingesetzt. Des Weiteren kennt man Löschschaum und wässrige Lösungen. Löschschaum ist eine hochwirksame Mischung aus Wasser, Schaummittel und Luft. Dem fließenden Wasserstrom wird über Zumischgeräte eine prozentual gleich bleibende Menge Schaummittel zugeführt. Das so entstehende Gemisch wird in nachgeschalteten Schaumerzeugern mit Luft verschäumt. Der Luftschaum nutzt unterschiedliche Löscheffekte: Kühlen, Ersticken, Trennen, Abdecken, Dämmen und Verdrängen -jeder für sich oder im Zusammenwirken mit anderen sorgen sie für einen schnellen Löscherfolg.

Als Löschmittel sind auch Inertgase bekannt. Die Löschwirkung von solchen Gasen, wie z. B. Argon, Stickstoff und Kohlendioxid wird durch die Verdrängung des Luftsauerstoffes erreicht. Man spricht hier vom Stickeffekt, der bei Unterschreitung des für die Verbrennung erforderlichen spezifischen Grenzwertes eintritt. In den meisten Fällen erlischt das Feuer schon bei einer Sauerstoffabsenkung auf 13,8 Vol.-%. Dazu muss das vorhandene Luftvolumen nur um etwa 1/3 verdrängt werden, was einer Löschgaskonzentration von 34 Vol.-% entspricht. Allerdings spielt hier die Personengefährdung eine wichtige Rolle.

Als Löschmittel sind neben diesen Inertgasen auch Halone bekannt, die im Wesentlichen dadurch wirken, dass sie in der Flamme in Radikale zerfallen, die als Radikalfänger in die Kettenreaktion der Verbrennung eingreifen und so den Brand zum Erliegen bringen. Sie weisen also einen Inhibitionseffekt auf. Auch diese sind für den Menschen giftig.

Als übliches Löschmitteln sind ferner Löschpulver bekannt, die hochwirksame und schnelle Löschmittel darstellen. Die schlagartige Löschwirkung der Pulverwolke resultiert aus dem Stickeffekt und Inhibitionseffekt. Durch die Bildung von Schmelzschichten auf glutbildenden Brandstoffen wird die Diffusion von Luftsauerstoff in den Brandherd und die Aufheizung der unmittelbaren Brandumgebung verhindert. Rückzündungen werden unterbunden. Löschpulver bestehen im Wesentlichen aus ungiftigen, anorganischen Salzen, die mit Hydrophorbierungs- und Rieselhilfsmitteln versetzt sind.

Diese üblichen Löschmittel weisen neben der inhärenten Problematik, dass es bereits zu einem Brand gekommen ist, im Wesentlichen zwei Hauptnachteile auf, nämlich eine fehlende Wiederverwendbarkeit einerseits und eine Gefährdung der Umwelt und/oder der Gesundheit von Personen anderseits. Zudem kommt die Beschränkung der Anwendung auf bestimmte Brandklassen.

Von dem nachträglichen Einsatz von Löschmitteln zu unterscheiden ist der (vorbeugende) Brandschutz mit Brandschutzmitteln, unter dem man alle Maßnahmen, die der Entstehung eines Brandes und der Ausbreitung von Feuer und Rauch (Brandausbreitung) vorbeugen, versteht.

Vorbeugender Brandschutz ist dabei der Überbegriff für alle Maßnahmen, die im Gegensatz zu Löschmitteln im Voraus die Entstehung, Ausbreitung und Auswirkung von Bränden verhindern, beziehungsweise stark einschränken. Meist wird Brandschutz in Gebäuden betrieben. Er beschränkt sich jedoch keinesfalls auf sie.

Die baulichen Maßnahmen beispielsweise in Gebäuden sind sehr vielfältig und erstrecken sich von den verwendeten Baustoffen und Bauteilen, geregelt in DIN 4102 und ENV 1992-1-2, über den baulichen Brandschutz in Industriebauten, geregelt in der DIN 18230, über die Fluchtwegplanung hin zu Löschanlagen in Gebäuden.

So offenbaren die DE 197 25 761 A1, die DE 196 00 977 A1 und DE 296 00 466 U1 die Verwendung von Hohlglaskugeln als wärme- und schallisolierende Zusätze in Brandschutzbeschichtungen und als Gerüststoffe zur Verbesserung der pastösen Eigenschaften von Schaummassen im vorbeugenden baulichen Brandschutz.

Die DE 43 16 189 A1 offenbart die Verwendung von Hohlglaskugeln als Verstärkungsmittel in thermoplastischen flammengeschützten Formmassen.

Die DE 102 39 631 A1 offenbart Isolierbauteile zur Wärme- und/oder Schallisolierung mit einer feuerhemmenden Beschichtung, die zur Reduzierung des Gewichts und Verbesserung der Isolierwirkung keramische Mikrohohlkugeln aufweisen.

Aus der DE 690 03 994 T2 ist ein pulverförmiges Löschmittel bekannt, dass eine Mischung von 95 bis 70 Gew.-% eines Boroxidpulvers mit einem Partikeldurchmesser im Bereich von 5 bis 1000 µm und 5 bis 30 Gew.-% eines anorganischen Pulvers aus Partikeln mit einer im Wesentlichen sphärischen Partikelform enthält, die entweder als Glasperlen mit einem Partikeldurchmesser im Bereich von 5 bis 200 µm oder als hohle Mikrokugeln im Bereich von 50 bis 600 µm ausgebildet sind.

In der DE 38 30 122 A1 ist ein Brandbekämpfungsmaterial erwähnt, das ganz oder hauptsächlich aus Glaspartikeln besteht, wobei die Glaspartikel Partikel aus zerkleinertem Glasmaterial sind, das einen hydrophoben Überzug trägt.

Aus der DE 43 43 196 A1 sind Hohlperlen aus Bohr enthaltenen Aluminiumphosphaten bekannt. Diese können als Verpackungsmaterial, zum Abdecken von Flüssigkeiten, als Zusatz zu Lacken, Beschichtungen, Mörteln, Beton und Gips, als Füllstoff für flüssige und feste Kunstharze, Elastomere und Kunststoffe, zur Herstellung von blättchenförmigen Pigmenten, als Elektroisoliermaterial, als Zusatz zu Spachtelmassen, keramischen Schlicken, Ziegelmasse, Estrichen, Kitten, Keramik, Glasmassen und metallischen und nichtmetallischen Sintermassen, als Ausgangsmaterialien zur Herstellung von Leicht-Formteilen und als Teil von Bau- und Konstruktionselementen mit isolierenden und schallabsorbierenden Eigenschaften, sowie gegebenenfalls auch als Isoliermaterial und für einen Brandschutz verwendet wird.

Aus der WO 2004/026788 A1 ist ein Isolierbauteil zur Wärme- und/oder Schallisolierung bekannt, dass zumindest partiell mit einer feuerhemmenden Beschichtung versehen ist, wobei die Beschichtung sich mindestens aus den folgenden Komponenten zusammen setzt:
40 bis 90 Gew.-% eines keramischen Klebstoffes
5 bis 50 Gew.-% keramischer Mikrohohlkugeln mit einer Korngröße im Bereich von 0,1 bis 3 mm sowie
0,1 bis 10 Gew.-% eines unter Wärmeeinwirkung expandierendes Treibmittel.

Aus der WO 2007/125070 A2 ist ein Löschmittel enthaltend temperaturfestes, hohles Rundgranulat und ein System zum Löschen von Bränden im Gefahrenobjekt unter dessen Verwendung sowie ein Verfahren zum Löschen von Bränden bekannt, wobei auf den Brand ein entsprechendes Löschmittel aufgebracht wird.

Demgegenüber hat die vorliegende Erfindung die Aufgabe, eine Verwendung eines Brandschutzmittels bereitzustellen, das vielseitig einsetzbar und wieder verwendbar ist. Zudem sollte es möglichst einfach und günstig herstellbar sowie umweltfreundlich sein. Auch sollte das Brandschutzmittel wenig oder gar nicht gesundheits- oder umweltgefährdend sein.

Diese Aufgaben werden durch die in Anspruch 1 angegebene Verwendung gelöst.

Bei der erfindungsgemäßen Verwendung besteht das Brandschutzmittel zum vorbeugenden Brandschutz durch dauerhaftes Aufbringen, auf das Gefahrenobjekt und/oder dauerhaftes Verfüllen des Gefahrenobjekts lediglich aus einem bis wenigstens 1000°C temperaturfesten hohlen Rundgranulat. Der Durchmesser des Rundgranulats liegt dabei zwischen 0,1 mm und 5 mm.

Trotz seiner Einfachheit ist es sehr wirkungsvoll und ohne Nachfolgeschäden wieder verwendbar. Zudem ist das Brandschutzmittel aufgrund seiner Eigenschaften (siehe unten) für die Anwendung zur Vorbeugung von Bränden nahezu aller Brandklassen geeignet.

Als Granulat wird ein Gut aus vielen kleinen, festen Partikeln wie Körnern oder Kugeln verstanden. Wichtige Abgrenzungsmerkmale sind, dass die Teilchen makroskopische Größe haben, also weder durch Quanteneffekte noch thermische Bewegung gestört werden, und nur über Kontaktkräfte wechselwirken. Auffälligste Eigenschaft granularer Materie ist, dass sie sich manchmal wie ein Festkörper verhält - beispielsweise können Steine auf Sand liegen, ohne einzusinken - und manchmal wie eine Flüssigkeit - so passt sich Sand der Form eines Gefäßes an und "fließt" bei Kippen aus ihm heraus

Das Brandschutzmittel wirkt durch das dauerhafte Abdecken/Verfüllen des möglichen Brandherdes bzw. Gefahrenobjekts, da das Rundgranulat sich nach der dichtesten Kugelpackung ab einer gewissen Schichtdicke abdichtend ablegt, so dass der Zutritt von Luftsauerstoff etc. weitestgehend oder vollständig verhindert wird.

Des Weiteren ist das Brandschutzmittel schwimmfähig (je nach Dichte und Flüssigkeit einstellbar über die Eigenschaften des verwendeten Rundgranulats), mit Druckluft über längere Strecken transportierbar, reinigungsfähig und somit wieder verwendbar, weist eine hohe Isolierfähigkeit auf, ist schütt- und rieselfähig, kriechfähig und nicht umwelt- oder gesundheitsgefährdend.

Vorzugsweise besteht das Rundgranulat aus einem inerten Material und weist eine Kugeloberfläche auf, die möglichst ohne Rauhigkeit ist. Dies erlaubt eine besonders gute Schütt- und Riesel- sowie Kriechfähigkeit und somit gute Transporteigenschaften und ständige Abdeckung des brandgefährdeten Bereichs, auch in engen und ansonsten schlecht zugänglichen Bereichen, wie Spalten. Somit wird auch dort eine Luft- bzw. Sauerstoffversorgung des brandgefährdeten Bereichs verhindert.

In der beauspruchton Ausführungsform (Ansprüche 1-10) liegt das Rundgranulat in Form von Hohlglaskugeln vor. Diese sind besonders inert und weisen eine glatte Oberfläche auf. Somit ergibt sich eine nur geringe Abnutzung oder Verbrauch, so dass das Rundgranulat in wesentlichen Teilen nach einem Brand wiedergewonnen und wieder verwendet werden kann. Der Wiederverwendung kann ggf. eine Reinigung vorausgehen. Die Reinigung könnte z. B. in einem Reinigungsbad stattfinden, aus dem das hohle Rundgranulat schwimmend abgeschöpft, getrocknet und zur Wiederverwendung gelagert wird.

Als Glasmaterial eignen sich solche Gläser, die inert und temperaturbeständig sind.

Solches Glas hat z. B. folgende Zusammensetzung
55 - 68 Gew.-% SiO₂
25 - 36 Gew.-% Al₂O₃
0 - 6 Gew.-% Fe₂O₃.

Auch eignet sich als Glasmaterial ein Borosilikatglas. Dieses weist üblicherweise folgende Zusammensetzung auf
70 - 80 Gew.-% SiO₂
7 - 13 Gew.-% B₂O₃
2 - 7 Gew.-% Al₂O₃
4 - 8 Gew.-% Na₂O und K₂O
0 - 5 Gew.-% Erdalkalimetalloxid.

Daneben eignen sich weitere feuerfeste Materialien als Stoff für das Rundgranulat, wie hochschmelzende Oxide und feuerfeste Silicate, wie z. B. Tonerdereiche Erzeugnisse (>56% Al₂O₃); Tonerdereiche Erzeugnisse (45-56% Al₂O₃); Schamotteerzeugnisse (30-45% Al₂O₃); saure Schamotteerzeugnisse (10-30% Al₂O₃, <85% Si02); Tondinaserzeugnisse (85-93% SiO₂); Silicaerzeugnisse (>93% SiO₂) oder Basische Erzeugnisse, wie Magnesit (>80% MgO), Magnesit-Chromit (55-80% MgO), Chromit-Magnesit (25-55% MgO), Chromit (>25% Cr₂O₃, <25% MgO), Forsterit, Dolomit. Daneben sind weitere bekannte hochtemperaturfeste keramische Materialien verwendbar.

Die Herstellung von Hohlglaskugeln ist bekannt und geht z. B. aus der DE 39 90 975 T1 und DE 689 26 048 T2 hervor, wobei dies im Wesentlichen durch Erhitzen von Vollglasteilchen erfolgt.

Sinnvollerweise weist das als Brandschutzmittel verwendete Rundgranulat einen Schmelzpunkt größer 1000 °C, insbesondere größer 1200 °C auf. Dies erlaubt einen besonders hohen Grad der Wiederverwendung, da nur ein vernachlässigbar kleiner Anteil des Rundgranulats, z.B. bei Kabelbränden(Lichtbogen) schmilzt, und erlaubt auch bei hohen Temperaturen eine sichere Abdeckung und somit Verhinderung des möglichen Brandes.

Aufgrund der kleinen Größe wird eine Kriechfähigkeit des Brandschutzmittels, bei der erstmaligen Einbringung erreicht, so dass das Brandschutzmittel auch kleine Spalte füllt.

Da das Rundgranulat hohl ist, ist die Dichte des Brandschutzmittels klein, so dass es schwimmfähig vorbeugend als flexible Deckschicht auf brennbaren Flüssigkeiten, z. B. von Bränden von Benzin- oder Öltanks usw. aufgebracht ist. Beispielsweise weisen Hohlglaskugeln mit einem Durchmesser von 0,3 mm eine durchschnittliche Dichte von 0,22g/cm³ auf. Das durch die brennbaren Flüssigkeiten ständig entstehende Gas kann nicht durch die Hohlglaskugelmasse diffundieren. Eine Brandgefahr ist somit dauerhaft ausgeschlossen. Auch die ständige Rückkondensierung führt nicht zu Flüssigkeitsverluste.

Das Rundgranulat kann zusätzlich eine Füllung mit Stickstoff oder Kohlendioxid aufweisen, wodurch ein geringer Anteil, der ggf. zerstört wird, feuerhemmende Gase freigibt.

Nach der erfindungsgemäßen Verwendung wird ein Brandschutzmittel bestehend aus einem bis wenigstens 1000°C temperaturfesten hohlen Rundgranulat dauerhaft auf das Gefahrenobjekt aufgebracht und/oder dauerhaft in das Gefahrenobjekt verfüllt. Besonders bevorzugt ist dabei der Einsatz des oben angegebenen Brandschutzmittels.

Enthält das Gefahrenobjekt ein brandgefährdetes flüssiges Gefahrgut, so wird das Brandschutzmittel abdeckend aufgebracht. Dies ist möglich, da das Brandschutzmittel schwimmfähig ist (s.o.). So eignet sich das Brandschutzmittel insbesondere für die Brandvorbeugung in Tanklagern flüssiger brennbarer Chemikalien, Treibstoffe, Öl usw.

Ist das Gefahrenobjekt ein brandgefährdeter Bereich in einem Gebäude, so wird der Bereich mit dem Brandschutzmittel vollständig verfüllt, so dass ein Zutritt von Luft verhindert und vorhandene Luft verdrängt wird. So eignet sich das Brandschutzmittel insbesondere für die Brandvorbeugung in Doppelböden, Kabelkanälen bzw. - schächten oder Rohrleitungsschächten, Räumen mit kulturhistorischen Exponaten, die nicht ständig begangen werden müssen.

## Patentansprüche

1. Verwendung eines Brandschutzmittels bestehend aus einem bis wenigstens 1000°C temperaturfesten hohlen Rundgranulat aus Hohlglaskugeln, wobei der Durchmesser des Rundgranulats zwischen 0,1 mm und 5 mm liegt zum vorbeugenden Brandschutz durch dauerhaftes Aufbringen auf das Gefahrenobjekt und/oder dauerhaftes Verfüllen des Gefahrenobjekts mit dem Brandschutzmittel.

2. Verwendung nach Anspruch 1, **dadurch gekennzeichnet, dass** das Glasmaterial
55 - 68 Gew.-% SiO₂
25 - 36 Gew.-% Al₂O₃
0 - 6 Gew.-% Fe₂O₃
umfasst.

3. Verwendung nach Anspruch 1, **dadurch gekennzeichnet, dass** das Glasmaterial ein Borosilikatglas mit
70 - 80 Gew.-% SiO₂
7 - 13 Gew.-% B₂O₃
2 - 7 Gew.-% Al₂O₃
4 - 8 Gew.-% Na₂O und K₂O
0 - 5 Gew.-% Erdalkalimetalloxid ist.

4. Verwendung nach einem der vorhergehenden Ansprüche, **dadurch gekennzeichnet, dass** das Rundgranulat einen Schmelzpunkt größer 1000 °C, insbesondere größer 1200 °C aufweist.

5. Verwendung nach einem der vorhergehenden Ansprüche, **dadurch gekennzeichnet, dass** das Rundgranulat eine Füllung mit Stickstoff oder Kohlendioxid aufweist.

6. Verwendung nach einem der vorhergehenden Ansprüche, **dadurch gekennzeichnet, dass** die Hohlglaskugeln bei einem Durchmesser von 0,3 mm eine durchschnittliche Dichte von 0,22g/cm³ aufweisen.

7. Verwendung nach einem der vorhergehenden Ansprüche, **dadurch gekennzeichnet, dass** das Gefahrenobjekt ein brandgefährdetes flüssiges Gefahrgut enthält, auf das das Brandschutzmittel abdeckend aufgebracht wird.

8. Verwendung nach Anspruch 7, **dadurch gekennzeichnet, dass** das Gefahrenobjekt ein Tanklager ist.

9. Verwendung nach einem der vorhergehenden Ansprüche 1 bis 6, **dadurch gekennzeichnet, dass** das Gefahrenobjekt ein brandgefährdeter Bereich in einem Gebäude ist, der mit dem Brandschutzmittel vollständig verfüllt wird.

10. Verwendung nach Anspruch 9, **dadurch gekennzeichnet, dass** das Gefahrenobjekt ein Doppelboden, Kabelkanal bzw. -schacht oder Rohrleitungsschacht ist.

## Claims

1. Use of a fire protection agent comprising hollow, circular, granular material formed by hollow glass spheres which is temperature-resistant up to at least 1000°C, the diameter of the circular granular material being between 0.1 mm and 5 mm, for preventative fire protection by permanent application to the item at risk and/or by permanent filling of the item at risk with the fire protection agent.

2. Use according to claim 1, **characterised in that** the glass material comprises 55 - 68 % by weight of SiO₂
25 - 36 % by weight of Al₂O₃
0 - 6 % by weight of Fe₂O3.

3. Use according to claim 1, **characterised in that** the glass material is a borosilicate glass having
70 - 80 % by weight of SiO₂
7 - 13 % by weight of B₂O₃
2 - 7 % by weight of Al₂O₃
4 - 8 % by weight of Na₂O and K₂O
0 - 5 % by weight of alkaline earth metal oxide.

4. Use according to one of the preceding claims, **characterised in that** the circular granular material has a melting point higher than 1000°C and in particular higher than 1200°C.

5. Use according to one of the preceding claims, **characterised in that** the circular granular material has a filling comprising nitrogen or carbon dioxide.

6. Use according to one of the preceding claims, **characterised in that** the hollow glass spheres have a diameter of 0.3 mm and an average density of 0.22 g/cm³.

7. Use according to one of the preceding claims, **characterised in that** the item at risk contains a liquid hazardous material which is a possible fire hazard and to which the fire protection agent is applied as a covering.

8. Use according to claim 7, **characterised in that** the item at risk is a tank farm.

9. Use according to one of preceding claims 1 to 6, **characterised in that** the item at risk is a region which is a possible fire hazard in a building, which region is completely filled with the fire protection agent.

10. Use according to claim 9, **characterised in that** the item at risk is a raised floor, cable conduit or trunking, or pipe conduit.

## Revendications

1. Utilisation d'un agent ignifuge constitué d'un granulat sphérique creux de billes de verre creuses résistant à une température pouvant atteindre au moins 1000°C, le diamètre du granulat sphérique étant compris entre 0,1 mm et 5 mm, pour l'ignifugation préventive en déposant de façon permanente l'agent ignifuge sur l'objet à risque et/ou en remplissant de façon permanente l'objet à risque avec celui-ci.

2. Utilisation selon la revendication 1, **caractérisée en ce que** le matériau de verre comporte
55 - 68% en poids de SiO₂
25 - 36% en poids de Al₂O₃
0 - 6% en poids de Fe₂O₃.

3. Utilisation selon la revendication 1, **caractérisée en ce que** le matériau de verre est un verre borosilicate comportant
70 - 80% en poids de SiO₂
7 - 13% en poids de B₂O₃
2 - 7% en poids de Al₂O₃
4 - 8% en poids de Na₂O et de K₂O
0 - 5% en poids d'oxyde de métaux alcalinoterreux.

4. Utilisation selon l'une des revendications précédentes, **caractérisée en ce que** le granulat sphérique a un point de fusion supérieur à 1000°C, notamment supérieur à 1200°C.

5. Utilisation selon l'une des revendications précédentes, **caractérisée en ce que** le granulat de verre est rempli d'azote ou de dioxyde de carbone.

6. Utilisation selon l'une des revendications précédentes, **caractérisée en ce que** les billes de verre creuses ont une densité moyenne de 0,22 g/cm³ pour un diamètre de 0,3 mm.

7. Utilisation selon l'une des revendications précédentes, **caractérisée en ce que** l'objet à risque contient un produit à risque liquide inflammable sur lequel l'agent ignifuge est déposé de façon à le recouvrir.

8. Utilisation selon la revendication 7, **caractérisée en ce que** l'objet à risque est un réservoir de stockage.

9. Utilisation selon l'une des revendications précédentes 1 à 6, **caractérisée en ce que** l'objet à risque est une zone inflammable dans un bâtiment qui est totalement rempli avec l'agent ignifuge.

10. Utilisation selon la revendication 9, **caractérisée en ce que** l'objet à risque est un double fond, un canal pour câbles, un puits à câbles ou un puits de canalisations.
